# EUROPÄISCHE PATENTSCHRIFT

(11) **EP 2 695 785 B1**
(45) Veröffentlichungstag und Bekanntmachung des Hinweises auf die Patenterteilung: **04.03.2015**
(21) Anmeldenummer: 13003112.3
(22) Anmeldetag: 19.06.2013
(51) Int. Cl.: B60W 30/06, B60Q 1/08, B60Q 9/00, G06K 9/00, H04N 7/18

(54) **Kraftfahrzeug mit Fahrerassistenzsystem und Verfahren zum Betrieb eines Fahrerassistenzsystems**
Motor vehicle with driver assistance system and method for operating a driver assistance system
Véhicule automobile doté d'un système d'assistance du conducteur et procédé de fonctionnement d'un système d'assistance du conducteur

(30) Priorität: 10.08.2012 DE 102012015939
(43) Veröffentlichungstag der Anmeldung: 12.02.2014
(73) Patentinhaber: AUDI AG, 85045 Ingolstadt (DE)
(72) Erfinder: Schuder, Claudia, 85049 Ingolstadt (DE); Bruns, Erich, 85053 Ingolstadt (DE)
(74) Vertreter: Thielmann, Frank

(56) Entgegenhaltungen:
- EP-A1- 2 026 097
- EP-A2- 2 028 632
- DE-A1- 19 737 653
- DE-A1-102007 050 374
- US-A1- 2008 007 429

## Beschreibung

Die Erfindung betrifft ein Kraftfahrzeug umfassend wenigstens eine Beleuchtungseinrichtung, die über eine Steuereinrichtung steuerbar ist, wenigstens eine Kamera zur Aufnahme der von der Beleuchtungseinrichtung ausgeleuchteten Fahrzeugumgebung, sowie eine Bildverarbeitungseinrichtung zur Verarbeitung der von der Kamera gelieferten Bilder zur Erzeugung eines Verarbeitungsergebnisses, in Abhängigkeit dessen ein fahrzeugseitiges Fahrerassistenzsystem steuerbar ist.

Im modernen Kraftfahrzeug haben Fahrerassistenzsysteme eine zunehmende Bedeutung. Sie unterstützen den Fahrer bei vielen Standardaufgaben, wie dem Einparken oder dem Halten einer gewissen Geschwindigkeit. Zunehmend werden auch Systeme interessant, die autonomes Fahren erlauben.

Die Fahrerassistenzsysteme werden durch zahlreiche am Fahrzeug angebrachten Detektoren und Kameras mit Informationen beliefert. Die Bilder der Kameras werden in der Regel von einer Bildverarbeitungseinrichtung verarbeitet, die Verarbeitungsergebnisse werden dem Fahrerassistenzsystem zur Verfügung gestellt. Ein Großteil der verwendeten bildverarbeitenden Algorithmen basiert auf Kantendetektion. Algorithmen zur Kantendetektion sind wohl etabliert und beruhen auf der Erkennung von plötzlichen Farb- oder Helligkeitswechseln. Daher ist es notwendig, dass Bilder, die einem Kantendetektionsalgorithmus zugeführt werden sollen, gleichmäßig ausgeleuchtet sind.

Ein Fahrerassistenzsystem ist beispielweise gemäß dem Oberbegriff des Anspruchs 1 aus US 2008/007429 A1 oder EP 2 026 097 A1 bekannt.

Sollen solche Fahrerassistenzsysteme bei schlechten Lichtverhältnissen eingesetzt werden, kann der Bildbereich der Kamera durch fahrzeugseitige Beleuchtungseinrichtungen ausgeleuchtet werden. Da eine fahrzeugseitige Beleuchtung aber stark gerichtet ist, kann das Bild durch Schlagschatten oder sehr starke Kontraste verfälscht werden. So muss beispielsweise bei reflektierenden oder hellen und sehr nahen Objekten die Empfindlichkeit der Kamera reduziert werden um ein Sättigen zu verhindern. Dadurch geht jedoch Empfindlichkeit in dunkleren Bildbereichen verloren. Zudem können durch die Beleuchtung der Fahrzeugumgebung mit einer fahrzeugseitigen Beleuchtungseinrichtung Schlagschatten entstehen, die von der Bildverarbeitungseinrichtung als Kante missinterpretiert werden können.

Der Erfindung liegt deshalb das Problem zugrunde, ein demgegenüber verbessertes Fahrzeug anzugeben.

Zur Lösung des Problems ist bei einem Kraftfahrzeug der eingangs genannten Art erfindungsgemäß vorgesehen, dass die Beleuchtungseinrichtung über die Steuerungseinrichtung nacheinander in wenigstens zwei die Fahrzeugumgebung unterschiedlich ausleuchtenden Modi betreibbar ist, derart, dass seitens der Kamera wenigstens zwei Bilder der unterschiedlich ausgeleuchteten Fahrzeugumgebung aufnehmbar sind, wobei die Bildverarbeitungseinrichtung zur Erzeugung des Verarbeitungsergebnisses anhand der wenigstens zwei unterschiedlichen Bilder ausgebildet ist.

Das erfindungsgemäße Kraftfahrzeug beruht auf der Idee der Bildverarbeitung mehrere Bilder mit unterschiedlicher Ausleuchtung der Fahrzeugumgebung zur Verfügung zu stellen. So kann es beispielsweise möglich sein, nur Teile des Bildbereiches der Kamera auszuleuchten oder ein Objekt aus unterschiedlichen Winkeln zu beleuchten.

Die aufgenommenen Bilder umfassen für jeden Bildpunkt eine Helligkeitsinformation. Da die Bilder bei einer unterschiedlich aufgeleuchteten Fahrzeugumgebung aufgenommen sind, sind in den Bildern auch für zumindest Teile der Pixel unterschiedliche Helligkeitswerte gespeichert. Die Helligkeitswerte der Bildpunkte hängen davon ab, mit welcher Intensität ein Bildbereich beleuchtet wird, was wiederum davon abhängen kann, aus welcher Richtung ein Bildbereich beleuchtet wird. Aufgrund der Tatsache, dass der Bildverarbeitungseinrichtung mehrere Bilder zur Verfügung stehen, die bei unterschiedlicher Ausleuchtung der Fahrzeugumgebung aufgenommen sind, kann beispielsweise erkannt werden, ob ein plötzlicher Helligkeitsübergang in einem Bild einer tatsächlichen Kante oder einem Schlagschatten entspricht, indem die gleiche Stelle eines zweiten Bilds berücksichtigt wird, in dem dieser Schlagschatten beispielsweise nicht vorhanden ist, da die den Schlagschatten erzeugende Beleuchtungseinrichtung nicht aktiv war. Allein aus einer Verarbeitung der Helligkeitsinformationen mehrerer unterschiedlich ausgeleuchteter Bilder können also weitere Informationen über die Umgebung des Kraftfahrzeugs gewonnen werden.

Beispielsweise lässt sich das eingangs beschriebene Problem der Sättigung eines Bildes bei Vorhandensein sehr heller oder spiegelnder Objekte im Bild vermeiden, indem nur Teile der Fahrzeugumgebung und damit des Bildes ausgeleuchtet werden. So kann beispielsweise zunächst ein Bild bei normaler Beleuchtung aufgenommen werden und anschließend ein Bild, bei dem die Beleuchtungshelligkeit im Bereich des sehr hellen oder spiegelnden Objektes reduziert wird. In diesem Fall bestehen mehrere Möglichkeiten zur weiteren Verarbeitung. Zum einen können die beiden Bilder auf einer nicht linearen Skala kombiniert werden um weitere Kontrastbereiche zu ermöglichen, zum anderen kann eine unabhängige Kantendetektion in beiden Bildern und eine anschließende Kombination der Informationen durchgeführt werden. Im Falle einer unabhängigen Kantendetektion muss jedoch berücksichtigt werden, dass durch die Nichtbeleuchtung oder schwächere Beleuchtung eines Bildbereiches künstlich neue Kanten erzeugt werden können. Da diese Kanten jedoch an einer bekannten Stelle und mit einer bekannten Form auftreten, lassen sich diese durch das Verfahren entstandenen Kanten leicht beseitigen.

Ebenso kann durch die Aufnahme mehrerer Bilder in unterschiedlichen Beleuchtungsmodi bei der Kantendetektion zwischen Schlagschatten und echten Kanten unterschieden werden. Dies soll hier am einfachen Fall eines Kraftfahrzeuges, das zwei Lichtquellen besitzt, eine links und eine rechts an der Vorderseite des Fahrzeugs, erläutert werden. Wird ein Objekt von einem Lichtkegel direkt angestrahlt, so wirft es einen sogenannten Schlagschatten. Dies bedeutet, dass es Bereiche hinter dem Objekt gibt, an die kein Licht gelangt. Wird ein Objekt nun von zwei parallelen Lichtkegeln mit einem gewissen Abstand angeleuchtet, so entstehen hinter dem Objekt zwei etwas abgedunkelte Bereiche, da diese Bereiche nur von jeweils einem Lichtkegel angestrahlt werden. Diese Abdunklung kann bei der Bildbearbeitung leicht als künstliche Kante erkannt werden. Erfindungsgemäß sollen nun jedoch weitere Bilder aufgenommen werden. Hier soll jeweils ein Bild aufgenommen werden, bei dem nur eine der beiden Lichtquellen des Fahrzeugs aktiv ist. Mit einer aktiven Lichtquelle wird jeweils einer der beiden zuvor leicht abgedunkelten Bereiche voll beleuchtet, der andere überhaupt nicht. Die aufgrund von Schlagschatten im ersten Bild vorhanden Kanten sind in den beiden Bildern, die mit nur einer Lichtquelle aufgenommen sind, jeweils zur einen Hälfte verschwunden, zur anderen stärker ausgeprägt. Die Kanten, die in einem Bild stärker ausgeprägt sind, sind im anderen verschwunden und umgekehrt. Daher ist es nun leicht möglich Kanten, die durch Schlagschatten erzeugt wurden, zu erkennen.

Bei nicht vollständiger Dunkelheit kann es auch möglich sein, künstliche Kanten durch Schlagschatten durch Aufnahme einiger Bilder mit reduzierter Helligkeit der Beleuchtungseinrichtung zu erkennen. Nimmt der Kontrast einer Kante deutlich schneller ab als andere Kontraste im Bild, wenn die Helligkeit der Beleuchtungseinrichtung reduziert wird, so deutet dies daraufhin, dass die scheinbare Kante durch einen Schlagschatten erzeugt wurde.

Gemäß der Erfindung, kann die Bildverarbeitungseinrichtung bei Ermittlung eines Verarbeitungsergebnisses, das von einer Kantendetektion abhängig ist, durch einen Vergleich von Bildern der unterschiedlich ausgeleuchteten Fahrzeugumgebung erkennen, ob es sich bei einer in wenigstens einem der Bilder erkannten Kante um eine tatsächliche Kante oder um eine aufgrund eines Schlagschattens erkannte Kante handelt.

Es ist vorteilhaft, wenn die Beleuchtungseinrichtung aus wenigstens einer modulierbaren Lichtquelle besteht. Die Modulation der Lichtquelle kann sehr unterschiedlich erfolgen. Beispielsweise ist es möglich, dass der Abstrahlwinkel der Lichtquelle verändert wird oder die Helligkeit der Lichtquelle verändert wird. Wie am vorgegangenen Beispiel des Kraftfahrzeugs mit zwei Lichtquellen zu sehen kann es schon ausreichen ein einfaches Abschalten einer einzelnen Lichtquellen zu ermöglichen. Bei Vorhandensein einer gewissen Resthelligkeit oder einer weiteren nicht modulierbaren Lichtquelle können damit schon Schlagschatten erkannt werden und damit Fehlerkennungen von Kanten vermieden werden.

Vorteilhaft ist es jedoch, wenn die Helligkeit der Lichtquelle kontinuierlich veränderbar ist. Besonders vorteilhaft ist es, wenn die Beleuchtungseinrichtung aus mehreren Lichtquellen besteht und die Steuerungseinrichtung zur Schaltung und/oder Modulation der Lichtquellen, einzeln oder in Gruppen, ausgebildet ist. So können die Lichtquellen beispielsweise in Gruppen geschaltet werden, um verschiedene Beleuchtungswinkel eines Objektes zu erfassen. Wie bereits beschrieben, kann häufig schon durch die Verwendung von zwei Lichtquellen in relativ großem Abstand eine klare Unterscheidung zwischen echten Kanten und Kanten, die durch Schlagschatten entstanden sind, vorgenommen werden. Es ist natürlich vorteilhaft, wenn eine größere Zahl von Lichtquellen vorhanden ist, da somit eine nahezu kontinuierliche Variation des Beleuchtungswinkels möglich ist.

Beispielsweise ist es möglich, dass die zwei vorderen Scheinwerfer eines Kraftfahrzeugs jeweils aus einer Vielzahl von Leuchtdioden zusammengesetzt sind, die jeweils einen gewissen Raumwinkel ausleuchten. Diese nahezu kontinuierliche Variation des Beleuchtungswinkels ist vor allen Dingen vorteilhaft, da hier Kanten, welche durch Schlagschatten erzeugt werden "wandern". Eine Änderung des Beleuchtungswinkels führt im aufgenommenen Bild zu einem Drehen der Kante. Werden die Bilder in hinreichendem kurzem Abstand hintereinander aufgenommen, ist ein solches Drehen von Kanten bei tatsächlichen Kanten kaum zu erwarten. Daher können hier Kanten, welche durch Schlagschatten erzeugt wurden, besonders leicht erkannt werden.

Es ist auch möglich, dass die Beleuchtungseinrichtung wenigstens einen Mikrospiegelaktor umfasst. Hier wird ein Array aus Mikrospiegeln mit einer Lichtquelle beleuchtet. Jeder der Mikrospiegel hat üblicherweise zwei mögliche Stellungen. In einer dieser Stellungen wird das Licht auf einen Absorber umgelenkt, in der anderen durch eine Optik abgestrahlt. Wird ein solches System statt eines normalen Scheinwerfers in einem Kraftfahrzeug verwendet, so können Teile des Strahlenbündels, das der Scheinwerfer aussendet, abgedunkelt werden. Dies erlaubt eine Anpassung der Ausleuchtung durch den Scheinwerfer mit sehr feiner Auflösung.

Wenn in einem Kraftfahrzeug eine Vielzahl modulierbarer Lichtquellen vorhanden sind, sind neben einer Verbesserung von Kontrast und/oder Kantendetektion auch andere Anwendungsfälle möglich. Es ist beispielsweise möglich, dass das Verarbeitungsergebnis ein Entfernungsintervall für ein Objekt an mindestens einem Bildpunkt ist, wobei die Steuerungseinrichtung zum Betrieb der Beleuchtungseinrichtung in mindestens einem weiteren, die Fahrzeugumgebung unterschiedlich ausleuchtenden Modus und die Bildverarbeitungseinrichtung zur Verarbeitung wenigstens eines weiteren unterschiedlichen Bildes ausgebildet ist, wenn die Breite des Intervalls einen Sollwert übersteigt.

Durch eine Modulation von Lichtquellen ist es möglich verschiedene Raumwinkel der Fahrzeugumgebung auszuleuchten. Ist nun aber beispielsweise eine von der Kamera entfernte Beleuchtungseinrichtung vorhanden, die aus einer Vielzahl von Lichtquellen besteht, die verschiedene Raumwinkel ausleuchten, so kann der Raumwinkel zwischen Lichtquelle und dem Objekt am Bildpunkt bestimmt werden, indem verschiedene Gruppen von Lichtquellen moduliert werden. So erscheint ein Bildpunkt in jenen Bildern am hellsten, in denen alle Lichtquellen, die das Objekt an diesem Bildpunkt beleuchten, maximale Intensität haben. Der Raumwinkel zwischen Lichtquelle und Bildpunkt kann also beispielsweise bestimmt werden, indem zunehmend mehr Lichtquellen abgedunkelt oder ausgeschaltet werden. Ein zweiter Raumwinkel ist durch die Bildkoordinaten gegeben, da jede Bildkoordinate einem Raumwinkel bezüglich der Kamera entspricht.

Da die Abstrahlwinkel der einzelnen Lichtquellen bekannt sind, muss zur Abstandsbestimmung also nur bestimmt werden, welche Lichtquellen das Objekt am Bildpunkt anstrahlen. Dies ist beispielsweise möglich, indem ein Bild bei voller Beleuchtung aufgenommen wird und anschließend die Hälfte der Lichtquellen, die Licht stark seitlich abstrahlen, also nahe Objekte beleuchten, abgeschaltet werden, wonach ein weiteres Bild aufgenommen wird. Ist der zu untersuchende Bildpunkt in beiden Bildern gleich hell, so kann eine Mindestentfernung angegeben werden. Wird der Bildpunkt im zweiten Bild deutlich dunkler, so kann eine Maximalentfernung angegeben werden. Bei einer nächsten Aufnahme kann dieses Intervall weiter unterteilt werden. Die Veränderung der Beleuchtung und Bildaufnahme wird solange fortgesetzt, bis die Breite des Abstandintervalls einen Sollwert unterschreitet oder bis eine andere Abbruchbedingung erreicht ist.

Um eine bessere Abstandsauflösung zu erreichen, kann der Abstand aus den Daten interpoliert werden. Hier soll vereinfachend angenommen werden, dass nur das Schalten von zwei Lichtquellen die Helligkeit des Bildpunktes stark beeinflusst. In diesem Fall kann die Bildverarbeitungseinrichtung aus der Stärke des Einflusses des Schaltens der jeweiligen Lichtquelle auf die Helligkeit des Bildpunktes ermitteln, ob der Bildpunkt eher dem einen oder dem anderen Raumwinkel zuzuordnen ist. Um ein stabileres Verfahren zu erreichen, ist es vorteilhaft Lichtquellen im großen Abstand zu haben. Beispielsweise können zwei Scheinwerfer vorhanden sein, die beide aus einer Vielzahl von Lichtquellen zusammengesetzt sind.

Es ist möglich, dass das Fahrassistenzsystem zum autonomen Durchführen einzelner Fahrmanöver, insbesondere das Einfahren in Garagen oder das Einparken, ausgebildet ist. Hier soll beispielsweise als mögliches Szenario das autonome Fahren in ein Tor beschrieben werden. Dabei steht das Fahrzeug in unbestimmter Entfernung vor dem Tor. Über die Kamera im Fahrzeug wird die Szene aufgenommen. Um pilotiert fahren zu können ist es nötig, dass die inneren Begrenzungen des Tores über eine Kamera erkannt werden. Bei geringer Umgebungsbeleuchtung werden die Scheinwerfer aktiviert, um die Szene auszuleuchten. Hieraus können Schlagschatten resultieren. Daher können Bildverarbeitungsalgorithmen wie z. B. Kantendetektion die Szene falsch interpretieren. Erfindungsgemäß können jedoch Schlagschatten durch eine Veränderung der Beleuchtung und eine Aufnahme mehrerer Bilder erkannt werden. Dadurch ist es möglich, die tatsächlichen Kanten zu erkennen, ein autonomes Durchfahren des Tors wird möglich. Erfindungsgemäß können zudem Abstände einzelner Punkte ermittelt werden, welche die reinen Kanteninformationen ergänzen.

Es ist auch möglich, dass das Fahrerassistenzsystem zur Darstellung eines aus dem Verarbeitungsergebnissen der Bildverarbeitungseinrichtung errechneten und/oder um diese ergänzten Bildes der Fahrzeugumgebung auf einen Bildschirm ausgebildet ist. Beispielsweise ist eine Anzeige von Entfernungen von Objekten möglich. Zudem ist, beispielsweise bei Rückfahrkameras, eine Aufarbeitung des Bildes möglich, sodass Kanten hervorgehoben werden oder 3D-Modelle der Fahrzeugumgebung erstellt werden.

Weitere Vorteile, Merkmale und Einzelheiten der Erfindung ergeben sich aus den im Folgenden beschriebenen Ausführungsbeispielen, sowie anhand der Zeichnungen. Dabei zeigen:
- Fig. 1: eine Prinzipzeichnung des erfindungsgemäßen Kraftfahrzeugs,
- Fig. 2: ein Ausführungsbeispiel zum Erkennen von Schlagschatten bei zwei Beleuchtungseinrichtungen,
- Fig. 3: eine schematische Darstellung der Lichtkegel bei einer Beleuchtungseinheit mit mehreren Lichtquellen,
- Fig. 4: ein Ausführungsbeispiel zum Erkennen von Schlagschatten bei einer Beleuchtungseinrichtung mit mehreren Lichtquellen,
- Fig. 5: ein Ausführungsbeispiel einer Beleuchtungseinrichtung mit einem Mikrospiegelaktor, und
- Fig. 6: eine schematische Darstellung zur Abstandsermittlung.

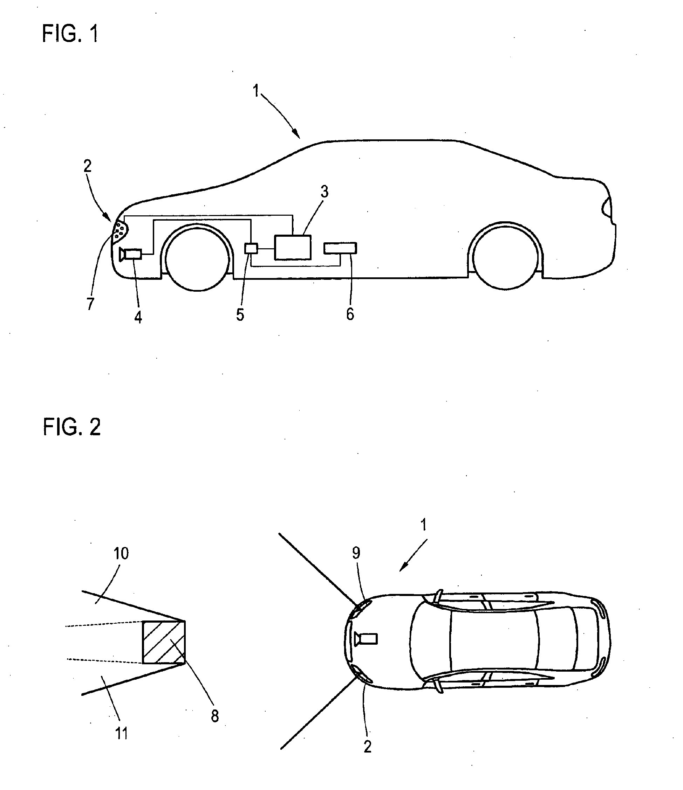

Fig. 1 zeigte ein Prinzipzeichnung eines erfindungsgemäßen Kraftfahrzeugs. Hier ist im Frontbereich des Kraftfahrzeugs 1 eine Beleuchtungseinrichtung 2 sowie eine Kamera 4 angebracht. Die aufgenommenen Bilder der Kamera 4 werden einer Bildverarbeitungseinrichtung 5 zugeführt. Die Verarbeitungsergebnisse der Bildverarbeitungseinrichtung 5 werden einem Fahrerassistenzsystem 6 zugeführt. Die Beleuchtungseinrichtung 2 besteht hier aus einer Vielzahl von Lichtquellen 7, z. B. LEDs. Eine Ansteuerung der einzelnen Lichtquellen 7 ist durch die Steuerungseinrichtung 3 möglich. Zur Aufnahme von Bildern der Fahrzeugumgebung in wenigstens zwei Ausleuchtungen können die Lichtquellen 7 der Beleuchtungseinrichtung 2 von der Steuerungseinrichtung 3 unmittelbar hintereinander in wenigstens zwei unterschiedlichen Modi betrieben werden, die die Fahrzeugumgebung unterschiedlich ausleuchten. Zudem gibt die Steuereinrichtung 3 auch ein Signal an die Bildverarbeitungseinrichtung 5, um dieser die Ausleuchtung der Bilder mitzuteilen. Die Bildverarbeitungseinrichtung 5 kann nach einer Verarbeitung einer vorgegebenen Anzahl von Bildern ein Verarbeitungsergebnis an das Fahrerassistenzsystem 6 senden. Das Fahrerassistenzsystem kann dieses Verarbeitungsergebnis beispielsweise zum automatischen Pilotieren des Fahrzeuges verwenden.

Es ist auch möglich, dass die Bildverarbeitungseinrichtung 5 abhängig vom Ergebnis der Bildverarbeitung die Steuerungseinrichtung anweist, weitere Beleuchtungssituationen herzustellen, sodass weitere Bilder verarbeitet werden können. Dies ist beispielsweise besonders nützlich, wenn der Abstand eines Objekts bestimmt werden soll oder es weiterhin Unklarheit über die Echtheit einer detektierten Kante gibt.

Fig. 2 zeigt ein Ausführungsbeispiel zum Erkennen von Schlagschatten bei zwei Beleuchtungseinrichtungen. Hier ist schematisch ein Kraftfahrzeug 1 dargestellt, an dem im Frontbereich eine Kamera 4 sowie links eine Beleuchtungseinheit 2 und rechts eine zweite Beleuchtungseinheit 9 angebracht sind. Vor dem Fahrzeug befindet sich ein Hindernis 8.

Sind nun beide Beleuchtungseinrichtungen aktiv, so entstehen links und rechts vom Hindernis 8 Bereiche, die nur von einer Beleuchtungseinrichtung beleuchtet werden, da sie den Schlagschatten 10 der Beleuchtungseinrichtung 2 darstellen bzw. den Schlagschatten 11 der zweiten Beleuchtungseinrichtung 9. Da an den Rändern dieser Bereiche eine rapide Helligkeitsänderung vorliegt, werden diese mit hoher Wahrscheinlichkeit als Kante detektiert. Dies soll vermieden werden. Wird nun zusätzlich zum ersten Bild, bei dem beide Beleuchtungseinrichtungen aktiv sind, ein Bild aufgenommen, bei dem nur die Beleuchtungseinrichtung 2 aktiv ist und ein weiteres Bild, bei dem nur die zweite Beleuchtungseinrichtung 9 aktiv ist, so ist im ersten dieser Bilder der Schlagschatten 10 der ersten Beleuchtungseinrichtung voll sichtbar und erzeugt eine sehr kontrastreiche Kante, der Schlagschatten 11 der zweiten Beleuchtungseinrichtung 9 ist jedoch nicht zu sehen, da diese Beleuchtungseinrichtung abgeschaltet ist. Im anderen Bild tritt genau die umgekehrte Situation auf. Daher sind jene Kanten, die durch Schlagschatten verursacht werden, jeweils in einem der weiteren Bilder deutlich kontrastreicher zu erkennen als zuvor, im anderen nicht. Deshalb sind solche Kanten eindeutig als eine Folge eines Schlagschattens zu erkennen und können von der Bildverarbeitung entfernt werden.

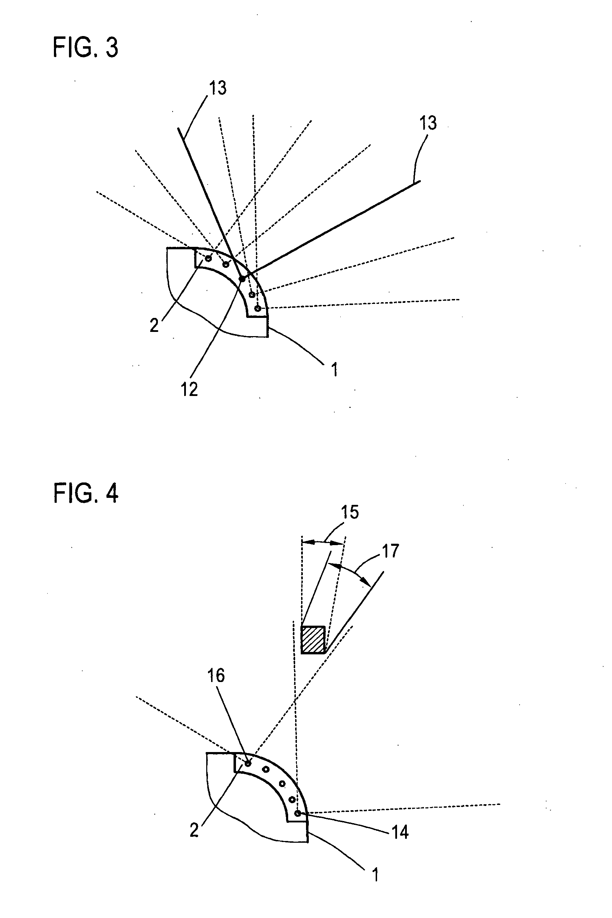

Fig. 3 zeigt eine schematische Darstellung der Lichtkegel bei einer Beleuchtungseinrichtung mit mehreren Lichtquellen. Hier ist eine Beleuchtungseinrichtung 2 eines Kraftfahrzeuges 1 gezeigt. Diese besteht aus einer Vielzahl von Lichtquellen, die jeweils etwas versetzt sind und einen leicht verdrehten Raumwinkelbereich beleuchten. Beispielsweise ist der Rand des Lichtkegels 13 der Lichtquelle 12 gesondert markiert. Es ist klar zu erkennen, dass die Lichtquellen in ihrer Gesamtheit einen sehr breiten Raumwinkel der Fahrzeugumgebung beleuchten. Durch Abschalten einzelner Lichtquellen kann dieser Raumwinkel eingeschränkt werden.

Fig. 4 zeigt ein Ausführungsbeispiel zum Erkennen von Schlagschatten bei einer Beleuchtungseinrichtung mit mehreren Lichtquellen. In diesem Beispiel wird das Hindernis 8 ausschließlich von einer Beleuchtungseinrichtung 2 angeleuchtet. Beispielhaft sind die Ränder des Schlagschattens 15 der äußeren Lichtquelle 14 sowie des Schlagschattens 17 der inneren Lichtquelle 16 eingezeichnet. Werden nun hintereinander die Lichtquellen von außen nach innen aktiviert, so wandern die Ränder des Schlagschattens zwischen diesen Positionen. Dies führt zu einer quasi kontinuierlichen Verschiebung der Kante mit einem Wechsel der Lichtquellen. Somit sind diese Kanten besonders leicht als ein Produkt von Schlagschatten zu erkennen und können bei der Ermittlung des Verarbeitungsergebnisses der Bildverarbeitung ignoriert werden.

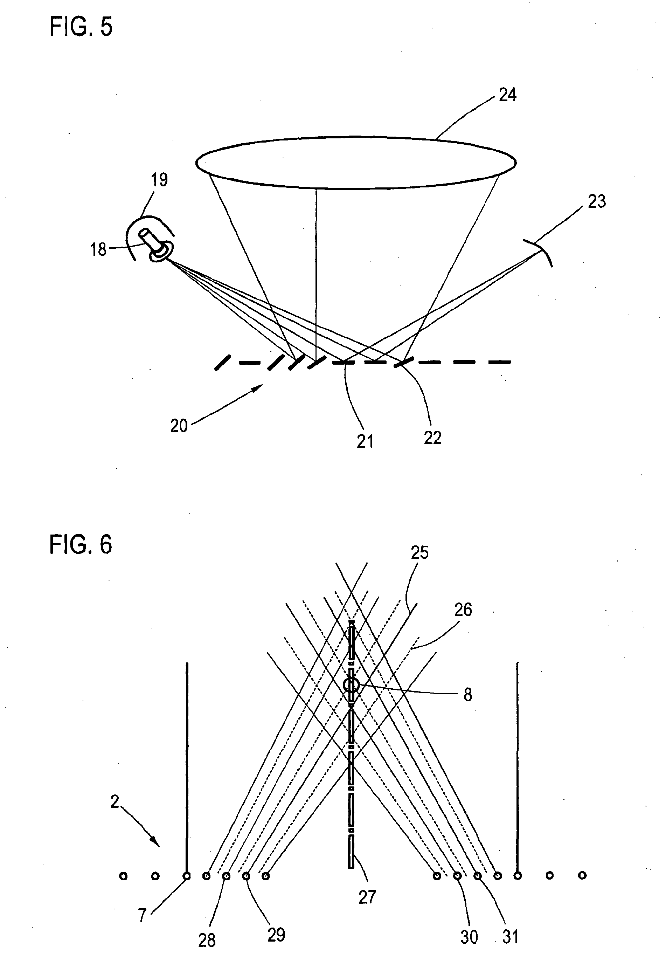

Fig. 5 zeigt eine Beleuchtungseinrichtung mit Mikrospiegelaktor. Hier wird mit einer Lichtquelle 18, die in einem Reflektor 19 integriert ist ein Mikrospiegelaktor 20 beleuchtet. Der Mikrospiegelaktor 20 besteht aus einem Array von Mikrospiegeln. Diese können zwischen zwei Zuständen hin und her geschaltet werden. Ein Mikrospiegel im Auszustand 21 reflektiert das Licht in Richtung eines Absorbers 23. Ein Mikrospiegel im Anzustand 22 reflektiert das Licht in Richtung einer Optik 24, die den Lichtkegel projiziert. Sind alle Mikrospiegel im Anzustand so wird ein Lichtstrahl mit maximaler Raumwinkelausleuchtung erzeugt. Durch Schalten von einzelnen Mikrospiegeln oder Gruppen von Mikrospiegeln in den Auszustand können gezielt Teile des Lichtstrahles ausgeblendet werden. Dadurch wird eine selektive Beleuchtung erreicht.

Fig. 6 zeigt eine schematische Darstellung zur Abstandsermittlung. Hier sind zur einfacheren Darstellung alle Lichtquellen 7 der Beleuchtungseinrichtung 2 auf einer geraden Linie angeordnet. Durchgezogene Linien 25 geben jeweils das Zentrum des Lichtkegels einer Lichtquelle an. Gestrichelte Linien 26 markieren den Übergangsbereich zwischen den Lichtkegeln der benachbarten Lichtquellen. Die strichpunktierte Linie 27 zeigt den Raumwinkel, der dem Kamerapixel zugeordnet ist. Zwecks Klarheit wurde ein zentraler Pixel gewählt, was einer in Fahrtrichtung laufenden geraden Linie entspricht.

Ist nun auf dem Kamerapixel ein Hindernis 8 zu erkennen, so kann der Abstand dieses Hindernisses ermittelt werden. Hierzu können bei der linken und rechten Beleuchtungseinrichtung jeweils sukzessive Lichtquellen abgeschaltet werden, beispielsweise von außen nach innen. Wird zu irgendeinem Zeitpunkt eine deutliche Absenkung der Helligkeit des Pixels festgestellt, so wird angenommen, dass der Gegenstand sich im Raumwinkel der Fahrzeugumgebung befindet, den diese Lichtquelle ausleuchtet. Es lässt sich somit im gezeigten Beispiel feststellen, dass das Objekt im Bereich der Lichtquellen 28, 29, 30 und 31 ist. Da ein Schalten jeder dieser Lichtquellen eine gleichgroße Helligkeitsänderung des Pixels bewirkt, kann geschlossen werden, dass sich das Objekt jeweils im Randgebiet der benachbarten Lichtkegel der Lichtquellen 28 und 29 sowie 30 und 31 befindet. Somit sind für die Positionen des Objekts zwei Raumwinkel relativ zu den Beleuchtungsquellen sowie ein Raumwinkel relativ zur Kamera bekannt. Dies erlaubt eine überbestimmte Ermittlung der Objektposition. Aufgrund der Überbestimmung können Fehler in der Entfernungsmessung leicht festgestellt werden.

## Patentansprüche

1. Kraftfahrzeug (1) umfassend wenigstens eine Beleuchtungseinrichtung (2), die über eine Steuerungseinrichtung (3) steuerbar ist, wenigstens eine Kamera (4) zur Aufnahme der von der Beleuchtungseinrichtung ausgeleuchteten Fahrzeugumgebung, sowie eine Bildverarbeitungseinrichtung (5) zur Verarbeitung der von der Kamera (4) gelieferten Bilder zur Erzeugung eines Verarbeitungsergebnisses, in Abhängigkeit dessen ein fahrzeugseitiges Fahrerassistenzsystem (6) steuerbar ist, wobei die Beleuchtungseinrichtung (2) über die Steuerungseinrichtung (3) nacheinander in wenigstens zwei die Fahrzeugumgebung unterschiedlich ausleuchtenden Modi betreibbar ist, derart, dass seitens der Kamera (4) wenigstens zwei Bilder der unterschiedlich ausgeleuchteten Fahrzeugumgebung aufnehmbar sind,
**dadurch gekennzeichnet,**
**dass** die Bildverarbeitungseinrichtung (5) zur Erzeugung des Verarbeitungsergebnisses anhand der wenigstens zwei unterschiedlichen Bilder durch Kantendetektion in wenigstens einem der Bildern ausgebildet ist, wobei sie zur Unterscheidung von tatsächlichen Kanten und aufgrund von Schlagschatten erkannten Kanten durch Vergleich der Bilder der unterschiedlich ausgeleuchteten Fahrzeugumgebung ausgebildet ist.

2. Kraftfahrzeug nach Anspruch 1,
**dadurch gekennzeichnet,**
**dass** die Beleuchtungseinrichtung (2) aus wenigstens einer modulierbaren Lichtquelle (7) besteht.

3. Kraftfahrzeug nach Anspruch 2,
**dadurch gekennzeichnet,**
**dass** die Beleuchtungseinrichtung (2) aus mehreren Lichtquellen (7) besteht und die Steuerungseinrichtung (3) zur Schaltung und/oder Modulation der Lichtquellen (7), einzeln oder in Gruppen, ausgebildet ist.

4. Kraftfahrzeug nach einem der vorangehenden Ansprüche,
**dadurch gekennzeichnet,**
**dass** die Beleuchtungseinrichtung (2) wenigstens einen Mikrospiegelaktor (20) umfasst.

5. Kraftfahrzeug nach einem der vorangehenden Ansprüche,
**dadurch gekennzeichnet,**
**dass** das Verarbeitungsergebnis ein Entfernungsintervall für ein Objekt an mindestens einem Bildpunkt ist, wobei die Steuereinrichtung (3) zum Betrieb der Beleuchtungseinrichtung (2) in mindestens einem weiteren, die Fahrzeugumgebung unterschiedlich ausleuchtenden Modus und die Bildverarbeitungseinrichtung (5) zur Verarbeitung wenigstens eines weiteren unterschiedlichen Bildes ausgebildet ist, wenn die Breite des Intervalls einen Sollwert übersteigt.

6. Kraftfahrzeug nach einem der vorangehenden Ansprüche,
**dadurch gekennzeichnet,**
**dass** das Fahrerassistenzsystem (6) zum autonomen Durchführen einzelner Fahrmanöver, insbesondere das Einfahren in Garagen oder das Einparken, ausgebildet ist.

7. Kraftfahrzeug nach einem der vorangehenden Ansprüche,
**dadurch gekennzeichnet,**
**dass** das Fahrerassistenzsystem (6) zur Darstellung eines aus den Verarbeitungsergebnissen der Bildverarbeitungseinrichtung errechneten und/oder um diese ergänzten Bildes der Fahrzeugumgebung auf einem Bildschirm ausgebildet ist.

8. Verfahren zum Betrieb eines Fahrerassistenzsystems (6) eines Kraftfahrzeugs (1), umfassend wenigstens eine Beleuchtungseinrichtung (2), die über eine Steuerungseinrichtung (3) steuerbar ist, wenigstens eine Kamera (4) zur Aufnahme der von der Beleuchtungseinrichtung (2) ausgeleuchteten Fahrzeugumgebung, sowie eine Bildverarbeitungseinrichtung (5) zur Verarbeitung der von der Kamera (4) gelieferten Bilder zur Erzeugung eines Verarbeitungsergebnisses, wobei zunächst wenigstens ein Bild der wenigstens einen Kamera (4) in einem ersten Modus der Beleuchtungseinrichtung (2), in dem die Fahrzeugumgebung in einer ersten Weise ausleuchtet wird, aufgenommen wird, unmittelbar anschließend wenigstens ein weiteres Bild in wenigstens einem zweiten Modus der Beleuchtungseinrichtung (2), in dem die Fahrzeugumgebung in einer zweite Weise ausleuchtet wird, aufgenommen wird, anschließend die mindestens zwei Bilder aus den vorgehenden Schritte durch die Bildverarbeitungseinrichtung (5) verarbeitet werden, wobei die Erzeugung des Verarbeitungsergebnisses anhand der wenigstens zwei unterschiedlichen Bilder durch Kantendetektion erfolgt und die Bildverarbeitungseinrichtung (5) zwischen tatsächlichen Kanten und aufgrund von Schlagschatten erkannten Kanten durch Vergleich der Bilder der unterschiedlich ausgeleuchteten Fahrzeugumgebung unterscheidet, und das Verarbeitungsergebnis an das Fahrerassistenzsystem (6) weitergeleitet wird.

9. Verfahren nach Anspruch 8,
**dadurch gekennzeichnet,**
**dass** als Verarbeitungsergebnis eine Entfernungsintervall für ein Objekt an mindestens einem Bildpunkt ermittelt wird, wobei wenigstens ein weiteres Bild in wenigstens einem weiteren Modus der Beleuchtungseinrichtung (2), in dem die Fahrzeugumgebung in einer weiteren Weise ausleuchtet wird, aufgenommen und von der Bildverarbeitungseinrichtung (5) verarbeitet wird, wenn die Breite des Intervalls einen Sollwert übersteigt.

10. Verfahren nach einem der Ansprüche 8 oder 9,
**dadurch gekennzeichnet,**
**dass** das Verarbeitungsergebnis durch das Fahrerassistenzsystem (6) zum autonomen durchführen einzelner Fahrmanöver, insbesondere das Einfahren in Garagen oder das Einparken genutzt wird.

11. Verfahren nach einem der Ansprüche 8 bis 10,
**dadurch gekennzeichnet,**
**dass** das Fahrerassistenzsystem (6) aus dem Verarbeitungsergebnis ein Bild der Fahrzeugumgebung berechnet oder eines der wenigstens zwei Bilder mit dem Verarbeitungsergebnis ergänzt, und das berechnete oder ergänzte Bild im Anschluss auf einem Bildschirm darstellt.

## Claims

1. Motor vehicle (1) comprising at least one lighting device (2) which can be controlled by means of a control device (3), at least one camera (4) for recording the surroundings of the vehicle illuminated by the lighting device, and an image processing device (5) for processing the images supplied by the camera (4) in order to produce a processing result, on the basis of which result a driver assistance system (6) in the vehicle can be controlled, the lighting device (2) being able to be operated by means of the control device (3) sequentially in at least two modes which illuminate the surroundings of the vehicle differently, in such a way that the camera (4) can record at least two images of the differently illuminated surroundings of the vehicle, **characterised in that** the image processing device (5) is designed to produce the processing result on the basis of the at least two different images by means of edge detection in at least one of the images, said device being designed to distinguish between actual edges and edges identified due to shadows by comparing the images of the differently illuminated surroundings of the vehicle.

2. Motor vehicle according to claim 1, **characterised in that** the lighting device (2) consists of at least one light source (7) which can be modulated.

3. Motor vehicle according to claim 2, **characterised in that** the lighting device (2) consists of a plurality of light sources (7), and the control device (3) is configured to switch and/or modulate the light sources (7) individually or in groups.

4. Motor vehicle according to any of the preceding claims, **characterised in that** the lighting device (2) includes at least one digital micromirror device (20).

5. Motor vehicle according to any of the preceding claims, **characterised in that** the processing result is a distance interval for an object at at least one image point, the control device (3) being configured to operate the lighting device (2) in at least one further mode which illuminates the surroundings of the vehicle differently, and the image processing device (5) being configured to process at least one further different image when the width of the interval exceeds a desired value.

6. Motor vehicle according to any of the preceding claims, **characterised in that** the driver assistance system (6) is configured to autonomously execute individual driving manoeuvres, in particular entering garages or parking.

7. Motor vehicle according to any of the preceding claims, **characterised in that** the driver assistance system (6) is configured to display on a screen an image of the surroundings of the vehicle generated from the processing results of the image processing device and/or complemented thereby.

8. Method for operating a driver assistance system (6) of a motor vehicle (1) comprising at least one lighting device (2) which can be controlled by means of a control device (3), at least one camera (4) for recording the surroundings of the vehicle illuminated by the lighting device (2), and an image processing device (5) for processing the images supplied by the camera (4) in order to produce a processing result, at least one image of the at least one camera (4) firstly being recorded in a first mode of the lighting device (2) in which the surroundings of the vehicle are illuminated in a first manner, at least one further image being recorded immediately afterwards in at least one second mode of the lighting device (2) in which the surroundings of the vehicle are illuminated in a second manner, the at least two images from the preceding steps then being processed by the image processing device (5), the processing result being produced on the basis of the at least two different images by means of edge detection, and the image processing device (5) distinguishing between actual edges and edges identified due to shadows by comparing the images of the differently illuminated surroundings of the vehicle, and the processing result being transmitted to the driver assistance system (6).

9. Method according to claim 8, **characterised in that** a distance interval for an object at at least one image point is determined as the processing result, at least one further image being recorded in at least one further mode of the lighting device (2) in which the surroundings of the vehicle are illuminated in a further manner and being processed by the image processing device (5) when the width of the interval exceeds a desired value.

10. Method according to either claim 8 or claim 9, **characterised in that** the processing result is used by the driver assistance system (6) in order to autonomously execute individual driving manoeuvres, in particular entering garages or parking.

11. Method according to any of claims 8 to 10, **characterised in that** the driver assistance system (6) generates an image of the surroundings of the vehicle from the processing result or supplements one of the at least two images with the processing result, and subsequently displays the generated or supplemented image on a screen.

## Revendications

1. Véhicule automobile (1) comprenant au moins un dispositif d'éclairage (2), qui peut être commandé via un dispositif de commande (3), au moins une caméra (4) pour reproduire l'environnement du véhicule éclairé par le dispositif d'éclairage, ainsi qu'un dispositif de traitement d'images (5) pour traiter les images fournies par la caméra (4) afin de générer un résultat de traitement en fonction duquel un système d'assistance au conducteur (6) côté véhicule peut être commandé, dans lequel le dispositif d'éclairage (2) peut être activé via le dispositif de commande (3) successivement dans au moins deux modes d'éclairage différent de l'environnement du véhicule de sorte que, côté caméra (4), au moins deux images de l'environnement du véhicule différemment éclairé puissent être reproduites,
**caractérisé en ce que** :
le dispositif de traitement d'images (5) est conçu pour générer le résultat de traitement sur la base des au moins deux images différentes par détection des bords dans au moins l'une des images, dans lequel il est conçu pour différencier les bords réels et les bords acquis en raison des ombres portées par comparaison des images de l'environnement du véhicule différemment éclairé.

2. Véhicule automobile selon la revendication 1, **caractérisé en ce que** :
le dispositif d'éclairage (2) est constitué d'au moins une source de lumière modulable (7).

3. Véhicule automobile selon la revendication 2, **caractérisé en ce que** :
le dispositif d'éclairage (2) est constitué de plusieurs sources de lumière (7) et le dispositif de commande (3) est conçu pour commuter et/ou moduler les sources de lumière (7) individuellement ou en groupes.

4. Véhicule automobile selon l'une quelconque des revendications précédentes,
**caractérisé en ce que** :
le dispositif d'éclairage (2) comprend au moins un micro-actionneur de miroir (20).

5. Véhicule automobile selon l'une quelconque des revendications précédentes,
**caractérisé en ce que** :
le résultat de traitement est un intervalle de distance pour un objet en au moins un point d'image, dans lequel le dispositif de commande (3) est conçu pour activer le dispositif d'éclairage (2) au moins dans un autre mode d'éclairage différent de l'environnement du véhicule et le dispositif de traitement d'images (5) pour traiter au moins une autre image différente si la largeur de l'intervalle dépasse une valeur théorique.

6. Véhicule automobile selon l'une quelconque des revendications précédentes,
**caractérisé en ce que** :
le système d'assistance au conducteur (6) est conçu pour effectuer de manière autonome certaines manoeuvres de conduite, en particulier pour garer la voiture dans des garages ou la stationner dans un parking.

7. Véhicule automobile selon l'une quelconque des revendications précédentes,
**caractérisé en ce que** :
le système d'assistance au conducteur (6) est conçu pour représenter sur un écran une image de l'environnement du véhicule calculée à partir des résultats de traitement du dispositif de traitement d'images et/ou complétée par ceux-ci.

8. Procédé d'actionnement d'un système d'assistance au conducteur (6) d'un véhicule automobile (1), comprenant au moins un dispositif d'éclairage (2) qui peut être commandé via un dispositif de commande (3), au moins une caméra (4) pour reproduire l'environnement du véhicule éclairé par le dispositif d'éclairage (2), ainsi qu'un dispositif de traitement d'images (5) pour traiter les images fournies par la caméra (4) afin de générer un résultat de traitement, dans lequel on reproduit tout d'abord au moins une image de la au moins une caméra (4) dans un premier mode du dispositif d'éclairage (2), dans lequel l'environnement du véhicule est éclairé d'une première manière, puis directement au moins une autre image dans au moins un second mode du dispositif d'éclairage (2), dans lequel l'environnement du véhicule est éclairé d'une seconde manière, puis les au moins deux images des étapes précédentes sont traitées par le dispositif de traitement d'images (5), dans lequel la génération du résultat de traitement se fait à la suite des au moins deux images différentes par détection des bords et le dispositif de traitement d'images (5) distingue entre les bords réels et les bords acquis en raison d'ombres portées par comparaison des images de l'environnement du véhicule différemment éclairé et le résultat du traitement est transmis au système d'assistance au conducteur (6).

9. Procédé selon la revendication 8,
**caractérisé en ce que** :
on détermine comme résultat de traitement un intervalle de distance pour un objet en au moins un point d'image, dans lequel au moins une autre image est reproduite dans au moins un autre mode du dispositif d'éclairage (2), dans lequel l'environnement du véhicule est éclairé d'une autre manière et est traité par le dispositif de traitement d'images (5) si la largeur de l'intervalle dépasse une valeur théorique.

10. Procédé selon l'une quelconque des revendications 8 ou 9,
**caractérisé en ce que** :
le résultat de traitement est utilisé par le système d'assistance au conducteur (6) pour effectuer de manière autonome certaines manoeuvres de conduite, en particulier pour garer la voiture dans des garages ou la stationner dans un parking.

11. Procédé selon l'une quelconque des revendications 8 à 10,
**caractérisé en ce que** :
le système d'assistance au conducteur (6) calcule une image de l'environnement du véhicule ou complète l'une des au moins deux images avec le résultat de traitement et représente l'image calculée ou complétée à la suite sur un écran.
